# EUROPÄISCHE PATENTSCHRIFT

(11) **EP 3 276 584 B1**
(45) Veröffentlichungstag und Bekanntmachung des Hinweises auf die Patenterteilung: **11.09.2019**
(21) Anmeldenummer: 17181494.0
(22) Anmeldetag: 14.07.2017
(51) Int. Cl.: G08B 13/02, G01G 19/12, B60K 15/03

(54) **EINRICHTUNG UND VERFAHREN ZUM ERKENNEN VON KRAFTSTOFFDIEBSTAHL**
DEVICE AND METHOD FOR DETECTING FUEL THEFT
DISPOSITIF ET PROCÉDÉ DE DÉTECTION DE VOLS DE CARBURANT

(30) Priorität: 27.07.2016 DE 102016213834
(43) Veröffentlichungstag der Anmeldung: 31.01.2018
(73) Patentinhaber: Continental Automotive GmbH, 30165 Hannover (DE)
(72) Erfinder: Dohmen, Ralf, 78050 Villingen-Schwenningen (DE); Bäßler, Christian, 71083 Herrenberg (DE); Bertl, Svenja, 78147 Vöhrenbach (DE)

(56) Entgegenhaltungen:
- EP-A1- 2 028 459
- EP-A1- 2 594 534
- DE-U1-202009 005 218
- GB-A- 2 338 308

## Beschreibung

Die Erfindung betrifft eine Einrichtung und ein Verfahren zum Erkennen von Kraftstoffdiebstahl bei einem Fahrzeug, insbesondere bei Nutzfahrzeugen.

Die WO 2015/035431 A1 zeigt eine Einrichtung zum Erkennen von Kraftstoffdiebstahl bei einem Fahrzeug mit einem Sensor, einer Auswerteeinheit und einer Alarmeinheit.

Die GB 2 338 308 A offenbart eine Vorrichtung zur Überwachung einer Füllstandsveränderung von Flüssigkeiten, die dazu eingerichtet ist, einen Kraftstoffdiebstahl an einem Fahrzeug zu erkennen.

Die EP 2 028 459 A1 offenbart eine Vorrichtung und ein Verfahren zur Bestimmung eines Lastzustands eines Box- oder Tank-Containers. Dabei ist die Bestimmung des Lastzustands unter Einbeziehung von Achslastsensoren beschrieben.

Die EP 2 594 534 A1 offenbart eine Wiegevorrichtung. Die Wiegevorrichtung ist dazu eingerichtet, einen Inhalt eines Tanks, der auf einem Fahrzeug mit einer Kippentladefunktion angeordnet ist zu bestimmen. Die Bestimmung erfolgt über eine Erfassung einer Last, die mittels Kraftmessdosen an einem Scharnier einer Kippentladevorrichtung des Fahrzeugs gemessen wird.

Als nachteilig daran ist anzusehen, dass der Sensor am Tankstutzen zu montieren ist, was zeit- und kostenaufwendig ist. Aufgabe ist es, eine demgegenüber verbesserte Einrichtung vorzuschlagen.

Es wird eine Einrichtung zum Erkennen von Kraftstoffdiebstahl bei einem Fahrzeug bereitgestellt. Die Einrichtung umfasst Achslastsensoren, die an unterschiedlichen Achsen und/oder auf unterschiedlichen Seiten des Fahrzeugs angeordnet und zur Erfassung einer Achslast des Fahrzeugs in zeitlichen Abständen eingerichtet sind. Die Einrichtung umfasst auch eine Auswerteeinheit, die dazu eingerichtet ist, die erfasste Achslast des Fahrzeugs auszuwerten. Es ist vorgesehen, dass die Auswerteeinheit in einem digitalen Tachographen integriert und dazu eingerichtet ist, bei einem Auftreten eines für einen Kraftstoffdiebstahl typischen Profils einer Änderung der Achslast, einen Kraftstoffdiebstahl zu detektieren.

Die Auswerteeinheit ist dazu eingerichtet einen Alarm auszulösen, wenn die Auswertung den Kraftstoffdiebstahl detektiert.

Erfindungsgemäß ist der Sensor zum Detektieren eines auf einen Kraftstoffdiebstahl hinweisenden Parameters ein Achslastsensor zur Messung der Achslast des Fahrzeugs. Das Signal des Achslastsensors wird von der Auswerteeinheit daraufhin überprüft, ob die Achslast konstant bleibt oder sich ändert. Im Fall eines Kraftstoffdiebstahls reduziert sich die Achslast, was über eine zyklische Messung detektiert wird. Dabei ist die Achslastmessung an einer Achse ausreichend, wenn der Tank in deren Nähe angeordnet ist und hinreichend genau gemessen wird. Ein Vorteil der Erfindung liegt darin, dass ein im Lkw integriertes On-Board-Wiege-System genutzt werden kann, um die Achslastsensorsignale zu erzeugen. Es sind also keine zusätzlichen Hardwareelemente zum Messen bzw. zum Anzeigen erforderlich. Die Einrichtung zum Erkennen von Kraftstoffdiebstahl wird nur bei Standzeiten des Fahrzeugs aktiviert, nicht zu Zeiten, bei denen sich das Fahrzeuggewicht bzw. die Achslast ändert. Während normaler Fahrt bzw. beim Be- und Entladen des Fahrzeugs ist die Einrichtung deaktiviert.

Es ist vorgesehen, dass die Alarmeinheit akustische und/oder optische Signale am Fahrzeug auslöst, um die Diebe abzuschrecken. Sie kann aber auch zusätzlich oder alternativ über eine Datenleitung, über einen Datenbus, per Funk, Mobilfunk, WLAN etc. eine Alarmmeldung an den Fahrzeugführer, den Fahrzeugeigner, die Polizei oder andere geeignete Instanzen absetzen, um diesen ein Eingreifen zu ermöglichen.

Erfindungsgemäß ist vorgesehen, dass Achslastsensoren an unterschiedlichen Achsen und/oder auf unterschiedlichen Seiten des Fahrzeugs angeordnet sind. Dies ermöglicht es, Änderungen des Fahrzeuggewichts, die durch Kraftstoffdiebstahl hervorgerufen werden, von Änderungen des Fahrzeuggewichts, die auf anderen Ursachen beruhen, zu unterscheiden. Kraftstoffdiebstahl führt dazu, dass sich die Achslast in der Nähe des bzw. der Kraftstofftanks verändert, während andere Ursachen, wie beispielsweise Gewichtszunahme durch Schneefall oder Gewichtsabnahme durch Schmelzen von auf dem Fahrzeug befindlichem Schnee, eine gleichmäßigere Achslaständerung hervorrufen. Durch die Auswertung mehrerer Sensoren unterschiedlicher Achsen bzw. unterschiedlicher Fahrzeugseiten können so Fehlalarme vermieden werden.

Vorzugsweise weist die erfindungsgemäße Einrichtung eine unabhängige Energieversorgung auf, so dass sie auch bei abgeschalteter Zündung funktionsfähig ist.

Die Einrichtung ist erfindungsgemäß mit einem Steuergerät verbunden. Dem Steuergerät werden die Messdaten zugeführt. Das Steuergerät speichert die Messdaten ab. Falls die Messdaten verschlüsselt übertragen werden, werden sie vom Steuergerät entweder entschlüsselt und abgespeichert, oder als verschlüsselte Daten abgespeichert. Auch eine Auswertung der Daten erfolgt vorzugsweise im Steuergerät.

Erfindungsgemäß ist vorgesehen, als Steuergerät einen digitalen Tachographen zu verwenden.

Die Auswerteeinheit ist in diesem Fall in den digitalen Tachographen integriert, der auch zur Anzeige und Speicherung der Sensordaten bzw. der daraus abgeleiteten Informationen und Alarmmeldungen dient.

Ein erfindungsgemäßes Verfahren zum Erkennen von Kraftstoffdiebstahl bei einem Fahrzeug weist die folgenden Schritte auf: Detektieren eines auf einen Kraftstoffdiebstahl hinweisenden Parameters, wobei der Parameter eine Achslast ist, Auswerten der detektieren Achslast und Auslösen eines Alarms wenn die Auswertung einen Kraftstoffdiebstahl ergeben hat. Dies hat die oben zur erfindungsgemäßen Einrichtung beschriebenen Vorteile.

Erfindungsgemäß ist vorgesehen, dass die Detektion des Parameters in zeitlichen Abständen erfolgt. Dies reduziert den Energieverbrauch zum Detektieren und Auswerten, wobei durch geeignete Wahl der zeitlichen Abstände trotzdem eine hohe Erkennungssicherheit eines Kraftstoffdiebstahls ermöglicht wird. Eine Abnahme der Achslast im Lauf der Zeit deutet auf Kraftstoffdiebstahl hin. Wenn die Achslast sehr langsam abnimmt, ist dies unter Umständen in Ordnung, wenn die Abnahme beispielsweise durch Verdampfung hervorgerufen, oder aus einem anderen Grund zu langsam für einen Kraftstoffdiebstahl ist. Beim Auswerten werden mehrere an unterschiedlichen Stellen des Fahrzeugs detektierte Parameter mit unterschiedlicher Gewichtung einbezogen. Bei Kraftstoffdiebstahl nimmt das Gewicht an der Achse, die dem Tank am nächsten liegt, stärker ab als die Parameter an den anderen Achsen. Wenn ein für Kraftstoffdiebstahl typisches Profil der Änderung der Achslast auftritt, wird ein Kraftstoffdiebstahl detektiert, andernfalls wird davon ausgegangen, dass die Gewichtsabnahme andere Ursachen hat. Wenn ein für Kraftstoffdiebstahl untypisches Profil auftritt, aber eine ungleichmäßige Ab- bzw. Zunahme der Achslast erfolgt, kann dies auf durch die Diebe ausgeführte Vertuschungsmaßnahmen hindeuten. Beispielsweise könnten die Diebe Gewicht an anderer Stelle des Fahrzeugs hinzufügen um den Kraftstoffdiebstahl zu verschleiern.

Erfindungsgemäß ist vorgesehen, dass die zeitlichen Abstände zwischen zwei Messungen der Achslast xi gekürzt werden, wenn Anzeichen eines Kraftstoffdiebstahls festgestellt werden. Dadurch wird eine häufigere Auswertung erreicht, mit der schneller eine Entscheidung getroffen werden kann, ob es sich tatsächlich um einen Diebstahl handelt, oder ob die Änderung der Achslast andere Ursachen hat. In diesem Fall wird ein höherer Energieverbrauch der Einrichtung in Kauf genommen, um einen Fehlalarm zu vermeiden bzw. schnell einen tatsächlichen Alarm auslösen zu können.

Eine erfindungsgemäße Auswerteeinheit weist einen Sensorsignal-Eingang auf, einem Alarmsignal-Ausgang und eine Gewichtssensorsignal-Auswerteeinheit.

Weitere Vorteile der Erfindung können der nachfolgenden Beschreibung von Ausführungsbeispielen entnommen werden. Dabei zeigen:
- Figur 1: eine schematische Darstellung einer erfindungsgemäßen Einrichtung,
- Figur 2: ein Flussdiagramm eines erfindungsgemäßen Verfahrens,
- Figur 3: eine erfindungsgemäße Auswerteeinheit.

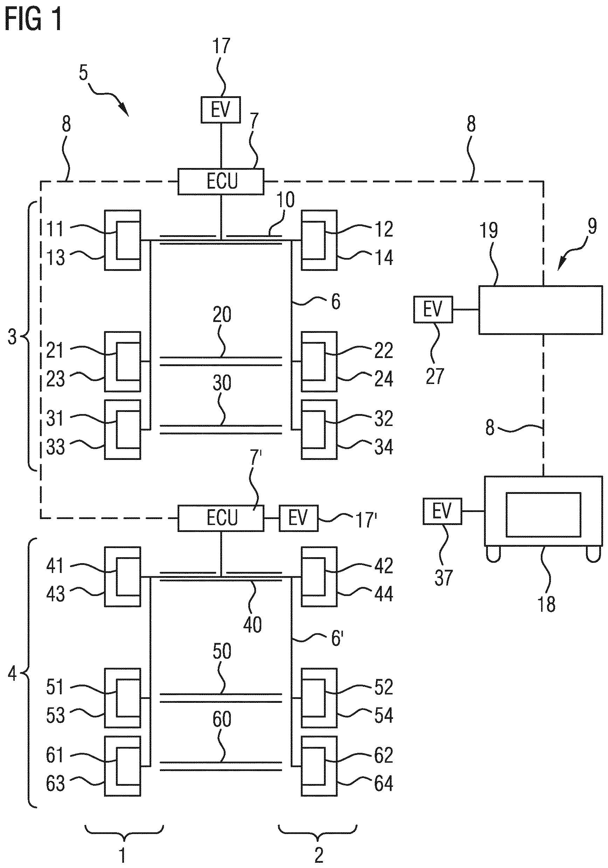

Figur 1 zeigt eine schematische Darstellung einer erfindungsgemäßen Einrichtung in einem aus Zugfahrzeug 3 und Anhänger 4 bestehenden Fahrzeug 5. Das Zugfahrzeug 3 weist eine vordere Achse 10 und zwei hintere Achsen 20, 30 auf. Im folgenden sind an der linken Seite 1 des Fahrzeugs 5 angeordnete Elemente mit auf "1" oder "3" endenden zweistelligen Bezugszeichen versehen, an der rechten Seite 2 angeordnete mit auf "2" oder "4" endenden zweistelligen Bezugszeichen.

An der Achse 10 befindet sich ein linkes Rad 13 und ein rechtes Rad 14. Weiterhin befinden sich dort Achslastsensoren 11 und 12 auf der linken bzw. rechten Seite. Entsprechende Räder 23, 24, 33, 34 und Achslastsensoren 21, 22, 31, 32, befinden sich an den hinteren Achsen 20, 30. Die Achslastsensoren 11, 12, 21, 22, 31, 32 sind mittels einer Signalleitung 6 mit einer Steuerungseinheit 7 verbunden, die auch als ECU (Electrical Control Unit) bezeichnet wird. Dies ist hier schematisch dargestellt. Die Achslastsensoren sind den Rädern zugeordnet und im Allgemeinen auf der Achse montiert. Prinzipiell ist aber auch denkbar, dass die Sensoren auf der Radnabe oder im Bereich der Räder montiert werden.

Der Anhänger 4 weist eine vordere Achse 40 und zwei hintere Achsen 50, 60 auf. An diesen sind Räder 43, 44, 53, 54, 63, 64 und Achslastsensoren 41, 42, 51, 52, 61, 62 angeordnet. Die Sensoren 41, ..., 62 sind über eine Signalleitung 6' mit einer Steuerungseinheit 7' des Anhängers 4 verbunden. Die Steuerungseinheiten 7, 7' sind mittels einer Signalverbindung 8 miteinander verbunden. Die Signalverbindung 8 kann sowohl eine physische Verbindung, wie eine elektrische Leitung oder eine optische Leitung, sein, als auch eine Funkverbindung. Die Steuerungseinheiten 7, 7' sind weiterhin mit einer Auswerteeinheit 9 verbunden, die hier als digitaler Tachograph 19 dargestellt ist. Die Auswerteeinheit 9 ist mit einer Alarmeinheit 18 verbunden. Auch diese sind mittels einer Signalverbindung 8 untereinander und mit den Steuerungseinheiten 7, 7' verbunden.

Alle Elemente der Einrichtung sind mit einer Energieversorgung, die auch mit EV bezeichnet ist, versehen, die unabhängig von der Energieversorgung des Zugfahrzeugs 3 bzw. des Anhängers 4 ist. Dies ist mittels einer Energieversorgung 37 angedeutet, die mit der Alarmeinheit 18 verbunden ist, mit einer Energieversorgung 27, die mit der Auswerteeinheit 9 verbunden ist, einer Energieversorgungseinheit 17, die mit der Steuerungseinheit 7 verbunden ist, und einer Energieversorgungseinheit 17', die mit der Steuerungseinheit 7' verbunden ist. Dabei versorgen die Energieversorgungseinheiten 17, 17' die Achslastsensoren 11, 12, 21, 22, 31, 32 und 41, 42, 51, 52, 61, 62 über die Steuerungseinheiten 7, 7' mit. Alternativ ist vorgesehen, dass jeder der Achslastsensoren 11,..., 62 eine eigene, hier nicht dargestellte Energieversorgung aufweist. Dies ist zum Beispiel ein Akku, ein Speicherkondensator oder eine andere geeignete Energieversorgung.

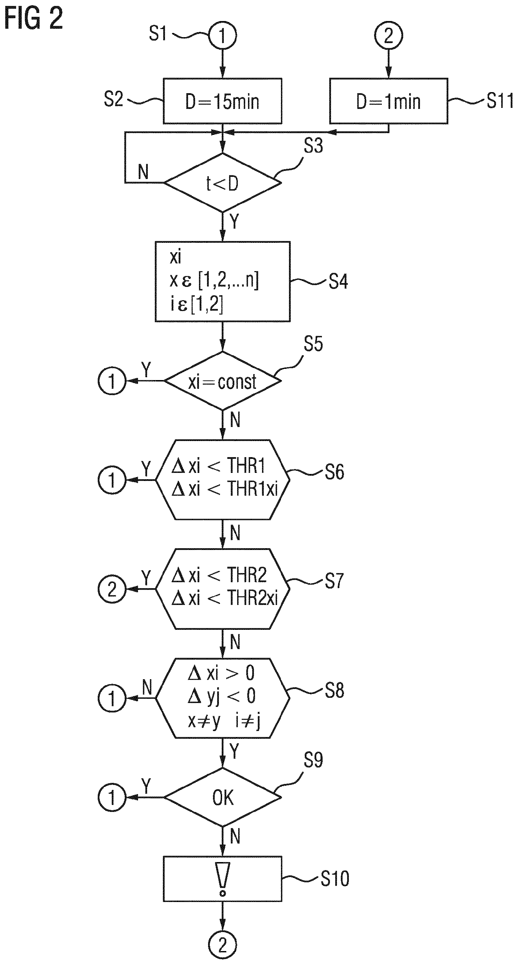

Figur 2 zeigt ein Flussdiagramm eines erfindungsgemäßen Verfahrens. Nach dem Start S1 wird eine Verzögerungszeit D auf 15 Minuten festgelegt, siehe Schritt S2. Im Schritt S3 wird geprüft, ob die Verzögerungszeit D abgelaufen ist. Ist dies der Fall, wird im Schritt S4 ein auf einen Kraftstoffdiebstahl hinweisender Parameter xi detektiert. Erfindungsgemäß handelt es sich bei dem Parameter um die Achslast, die entweder ein einzelner Wert xi ist, oder für mehrere Achsen x = 1, 2, ..., und mehrere Seiten i = 1, 2 des Fahrzeugs bestimmt wird.

Im Schritt S5 wird geprüft, ob die Achslast konstant ist oder nicht. Ist sie konstant, wird zum Schritt S1 verzweigt. Andernfalls wird im Schritt S6 geprüft, ob die Änderungen Δxi des Achslastwerts xi unterhalb eines Schwellwerts THR1 liegt. Ist dies der Fall, wird zu Schritt S1 verzweigt. Beim Vorliegen mehrerer Achslastwerte xi wird entweder geprüft, ob die Änderungen Δxi der Summe aller Achslastwerte xi unterhalb eines Schwellwerts THR1 liegt, oder ob jede einzelne Änderung Δxi unterhalb eines jeweiligen Schwellwerts THR1xi liegt. Wird der Schwellwert THR1, THR1xi überschritten, liegt gemäß einer ersten Ausführungsform der Erfindung ein ausreichender Hinweis auf einen Kraftstoffdiebstahl vor, es wird ohne weitere Zwischenschritte im Schritt S10 ein Alarm ausgelöst.

Gemäß einer Variante der Erfindung wird in Schritt S7 geprüft, ob die Änderung Δxi kleiner als ein zweiter Schwellwert THR2 bzw. THR2xi ist. Ist dies der Fall, wird ein Alarm im Schritt S10 ausgelöst. Andernfalls wird zu Schritt S11 verzweigt, in dem die Verzögerungszeit D reduziert wird. In Figur 2 ist eine reduzierte Verzögerungszeit D von einer Minute angegeben. Je nach vorgegebenen Randbedingungen können die Verzögerungszeiten D in Schritt S2 und S11 größer oder kleiner als hier angegeben gewählt sein.

Gemäß einer Variante der Erfindung wird in Schritt S8 geprüft, ob die Änderungen Δxi von Achslastwerten xi positiv, und Änderungen Δyj von anderen Achslastwerten yj negativ sind. Ist dies nicht der Fall, wird zu Schritt S1 verzweigt. Andernfalls wird in Schritt S9 geprüft, ob dieses vorgefundene Profil ein im Betriebsverlauf des Fahrzeugs 5 normales Verhalten darstellt. Ist dies der Fall, wird zu Schritt S1 verzweigt. Andernfalls wird dies als Hinweis auf einen Kraftstoffdiebstahl gewertet und zu Schritt S10 verzweigt. Alternativ wird, auch bei Vorliegen von normalem Verhalten, statt zu Schritt S1 zu Schritt S11 verzweigt, und erst dann wieder eine längere Verzögerungszeit D gewählt, wenn die Änderungen Δxi wieder unter dem ersten Schwellwert THR1, THR1xi oder dem zweiten Schwellwert THR2, THR2xi liegen.

In Schritt S10 wird gemäß einer Ausführungsform der Erfindung sowohl ein akustisches und optisches Signal am Fahrzeug 5 ausgelöst, als auch eine Alarmmeldung an den Fahrzeugführer, den Fahrzeugbesitzer und/oder die Polizei mittels Funk, Mobilfunk, Kurzstreckenfunk oder anderer geeigneter Mittel weitergeleitet. Gleichzeitig wird zu Schritt S11 verzweigt, um die Signale der Achslastsensoren 11, ..., 62 weiter auszuwerten.

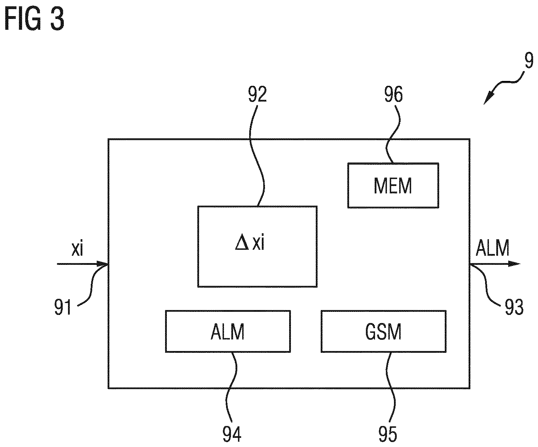

Figur 3 zeigt eine erfindungsgemäße Auswerteeinheit 9. Sie weist auf einen Sensorsignaleingang 91, eine Gewichtssensorsignal-Auswerteeinheit 92, und einen Alarmsignalausgang 93.

Die Auswerteeinheit 9 weist weiterhin eine Anzeigeeinheit 94 auf, mittels deren ein optischer Alarm für den Fahrer, aber auch Statusinformationen wie aktuelle Achslast, Änderung der Achslast über einen bestimmten Zeitraum, oder ähnliches, ausgegeben werden. Die Auswerteeinheit 9 weist weiterhin eine Mobilfunkeinheit 95 auf, mittels deren eine SMS an das Mobiltelefon des Fahrers, oder eine andere geeignete Status- bzw. Alarmmeldung an ein außerhalb des Fahrzeugs 5 befindliches Datenverarbeitungssystem weitergeleitet werden. Die Auswerteeinheit 9 weist weiterhin einen Speicher 96 auf, mittels dessen die Achslastwerte xi zur späteren Auswertung gespeichert werden.

In anderen Worten behebt die Erfindung den gemäß bekannter Lösungen auftretenden Nachteil, dass in das Fahrzeug zusätzlich eine Hardware zum Messen bzw. zum Anzeigen installiert werden muss. Hierbei entstehen dem Flottenmanager zusätzliche Kosten zum einen für die Hardware und zum anderen für die Installation. Ein weiterer Punkt ist die Auswertung der Daten. Hierfür wird ein zusätzliches System im Backoffice benötigt, welches zusätzliche monatliche Kosten verursacht.

Durch ein im LKW, dem Fahrzeug 5, integriertes OnBoard-Wiege-System wird das Gewicht des Zugfahrzeugs 3 und des Trailers, des Anhängers 4, gemessen. Dieses System wird im Zugfahrzeug 3 und im Anhänger 4 benötigt, um die Achslasten zu messen. Das System wird so ausgelegt, dass zyklische Messungen des Fahrzeuggewichts durchgeführt werden, sowohl bei angeschalteter Zündung als auch bei ausgeschalteter Zündung.

Verändert sich das Gewicht von einer zur nächsten kontinuierlich durchgeführten Messung, wird ein Alarm ausgelöst. Dies ist zum einen ein Alarm, der am Fahrzeug 5 ausgelöst wird, vergleichbar mit einer Alarmanlage, und/oder zum anderen eine Warnung, die an den Besitzer bzw. an den Fahrer gesendet wird. Zur Vermeidung von Fehlalarmen wird gewöhnlich ein Schwellwert THR1, THR2, der relativ oder absolut gewählt werden kann, definiert, der dafür sorgt, dass erst bei Über- bzw. Unterschreitung des Schwellwertes ein Alarm ausgelöst wird.

Mit der Einführung eines Gesetzes zur Achslastkontrolle mittels eines OnBoard-Wiege-Systems, wird bei jedem neuen LKW ein solches Messsystem integriert. Die Möglichkeit einer Nachrüstung vorhandener Fahrzeuge, auch ohne gesetzliche Grundlage, ist ebenfalls gegeben. Die Anzeige und die Speicherung der Daten erfolgt vorzugsweise mit dem in jedem LKW integrierten digitalen Tachographen. Es wird keine zusätzliche Hardware zur Diebstahldetektion benötigt. Eine zusätzliche Wartung des Systems ist nicht notwendig, sofern das Onboard-Wiege-System kalibriert ist. Folgekosten werden dadurch vermieden.

Die Erfindung kann ebenfalls in Abwandlung zur Detektion von Ladungsdiebstahl, auf anderen Gründen beruhende Veränderung des Gewichts der Ladung, oder dem Diebstahl anderer Betriebsmittel verwendet werden, indem das Gewicht kontrolliert wird. Erfindungsgemäß ist im Fahrzeug mindestens ein Onboard-Wiege-Sensor, in der vorgehenden Beschreibung als Achslastsensor 11, 12, ..., 61, 62 bezeichnet, verbaut, der das Fahrzeuggewicht misst. Über eine Steuerungseinheit 7, 7', hier auch als Electrical Control Unit, ECU, bezeichnet, werden die Daten einem Erfassungs- und Aufzeichnunqsqerät, der Auswerteeinheit 9, die in einen digitalen Tachographen 19 integriert ist, zur Verfügung gestellt. Dieses Gerät wertet die Daten aus und löst bei Überschreiten von Schwellwerten THR1, THR2 einen Alarm aus. Darüber hinaus speichert dieses Gerat Daten sicher, und stellt diese bei Bedarf anderen Geräten zur Verfügung, die dann weitere Aktionen auslösen. Als Beispiel für ein solches Gerät wird auf die Alarmeinheit 18 verwiesen.

Gemäß einer Variante erfolgt eine verschlüsselte Datenübertragung über die Signalverbindung 8. Dabei erfolgt die Verschlüsselung in den Achslastsensoren 11, ..., 62 und die Entschlüsselung in der Auswerteeinheit 9. Durch die Verschlüsselung wird eine Manipulation der Daten ausgeschlossen und die Zuverlässigkeit der Daten sichergestellt. Eine Verschlüsselung ist aber weder für das Messverfahren noch für die vorliegende Anwendung, die Detektion von Kraftstoffdiebstahl, erforderlich. Sie erhöht aber die Sicherheit und ist bei Bedarf sinnvoll einsetzbar. Im Gegensatz zu dem vorhandenen Messaufnehmer, der in jedem Tank zur Füllstandsmessung verbaut ist, ist die erfindungsgemäße Lösung manipulationssicher. Auch der im Tank verbaute Messaufnehmer kann entweder in zeitlichen Intervallen oder ständig als Signalquelle genutzt werden, um den Füllstand zu überwachen. Allerdings kann dieser Messaufnehmer elektrisch am Verbindungsstecker leicht manipulieren werden. Auch liegt der Stromverbrauch für die Überwachung höher, als bei der erfindungsgemäßen Lösung.

Es liegt im Können des Fachmanns, einige der oben beschriebenen Varianten abzuändern, oder in anderer Kombination als oben beschrieben zu realisieren.

## Patentansprüche

1. Einrichtung zum Erkennen von Kraftstoffdiebstahl bei einem Fahrzeug (5), aufweisend:
- Achslastsensoren (11, 12, 21, 22, 31, 32, ..., 61, 62), die an unterschiedlichen Achsen (10, 20, ..., 60) und/oder auf unterschiedlichen Seiten (1, 2) des Fahrzeugs (5) angeordnet und zur Erfassung einer Achslast (xi) des Fahrzeugs (5) in zeitlichen Abständen (S2, S3, S11) eingerichtet sind, und
- eine Auswerteeinheit (9), die dazu eingerichtet ist, die erfasste Achslast (xi) des Fahrzeugs (5) auszuwerten,
**dadurch gekennzeichnet, dass**
- die Auswerteeinheit (9) in einem digitalen Tachographen (19) integriert ist,
- die Auswerteeinheit (9) dazu eingerichtet ist, bei einem Auftreten eines für einen Kraftstoffdiebstahl typischen Profils einer Änderung (Δxi) der Achslast (xi), einen Kraftstoffdiebstahl zu detektieren, und
- die Auswerteeinheit (9) dazu eingerichtet ist, einen Alarm auszulösen, wenn die Auswerteeinheit (9) bei der Auswertung den Kraftstoffdiebstahl detektiert.

2. Einrichtung nach Anspruch 1, **dadurch gekennzeichnet, dass** die Auswerteeinheit (9) dazu eingerichtet ist, beim Auswerten (S5, ..., S9) mehrere, an unterschiedlichen Stellen des Fahrzeugs (5) detektierte Achslasten (xi, yj) mit unterschiedlicher Gewichtung einzubeziehen.

3. Einrichtung nach Anspruch 1 oder 2, **dadurch gekennzeichnet, dass** die Auswerteeinheit (9) dazu eingerichtet ist, die zeitlichen Abstände (S11) zu kürzen, wenn Anzeichen eines Kraftstoffdiebstahls festgestellt werden.

4. Einrichtung nach einem der vorhergehenden Ansprüche, **dadurch gekennzeichnet, dass** die Auswerteeinheit (9) dazu eingerichtet ist, einen Kraftstoffdiebstahl festzustellen, wenn die Änderung (Δxi) einer Summe aller Achslastwerte (xi) einen Schwellwert (THR1) überschreitet, und/oder wenn einzelne Änderungen (Δxi) einen jeweiligen Schwellwert (THR1xi) überschreiten.

5. Einrichtung nach einem der vorhergehenden Ansprüche, **dadurch gekennzeichnet, dass** die Auswerteeinheit (9) dazu eingerichtet ist, einen Kraftstoffdiebstahl festzustellen, wenn die Änderung (Δxi) der Summe aller Achslastwerte (xi) den Schwellwert (THR1) überschreitet und kleiner ist als ein Schwellwert (THR2), und/oder wenn die einzelnen Änderungen (Δxi) den jeweiligen Schwellwert (THR1xi) überschreiten und kleiner als ein jeweiliger Schwellwert (THR2xi) sind.

6. Einrichtung nach einem der vorhergehenden Ansprüche, **dadurch gekennzeichnet, dass** die Auswerteeinheit (9) dazu eingerichtet ist, einen Kraftstoffdiebstahl festzustellen, wenn Änderungen (Δxi) einiger der Achslastwerte (xi) positiv, und Änderungen (Δyj) der anderen Achslastwerte (yj) negativ sind.

7. Einrichtung nach einem der vorhergehenden Ansprüche, **dadurch gekennzeichnet, dass** die Einrichtung eine von der Zündung des Fahrzeugs (5) unabhängige Energieversorgung (17, 17', 27, 37) aufweist.

8. Einrichtung nach einem der vorhergehenden Ansprüche, **dadurch gekennzeichnet, dass** die Einrichtung zu einer verschlüsselten Datenübertragung über eine Signalverbindung (8) eingerichtet ist, wobei die Achslastsensoren (11, ..., 62) zu einer Verschlüsselung und die Auswerteeinheit (9) zu einer Entschlüsselung eingerichtet sind.

9. Fahrzeug (5), aufweisend eine Einrichtung nach einem der Ansprüche 1 bis 8.

10. Verfahren zum Betreiben einer Einrichtung zum Erkennen von Kraftstoffdiebstahl bei einem Fahrzeug (5) nach Anspruch 9,
**dadurch gekennzeichnet, dass**
- durch Achslastsensoren (11, 12, 21, 22, 31, 32, ..., 61, 62), die an unterschiedlichen Achsen (10, 20, ..., 60) und/oder auf unterschiedlichen Seiten (1, 2) des Fahrzeugs (5) angeordnet sind, eine Achslast (xi) des Fahrzeugs (5) in zeitlichen Abständen (S2, S3, S11) erfasst wird,
- durch eine in einem digitalen Tachographen (19) integrierte Auswerteeinheit (9) die erfasste Achslast (xi) des Fahrzeugs (5) ausgewertet wird,
- durch die Auswerteeinheit (9), bei einem Auftreten eines für einen Kraftstoffdiebstahl typischen Profils einer Änderung (Δxi) der Achslast (xi), ein Kraftstoffdiebstahl detektiert wird, und
- durch die Auswerteeinheit (9) ein Alarm ausgelöst wird, wenn die Auswerteeinheit (9) bei der Auswertung den Kraftstoffdiebstahl detektiert.

## Claims

1. Device for detecting fuel theft in a vehicle (5), having:
- axle load sensors (11, 12, 21, 22, 31, 32, ..., 61, 62) which are arranged on different axles (10, 20, ..., 60) and/or on different sides (1, 2) of the vehicle (5) and are set up to capture an axle load (xi) of the vehicle (5) at intervals of time (S2, S3, S11), and
- an evaluation unit (9) which is set up to evaluate the captured axle load (xi) of the vehicle (5),
**characterized in that**
- the evaluation unit (9) is integrated in a digital tachograph (19),
- the evaluation unit (9) is set up to detect fuel theft if a profile of a change (Δxi) in the axle load (xi) that is typical of fuel theft occurs, and
- the evaluation unit (9) is set up to trigger an alarm if the evaluation unit (9) detects fuel theft during the evaluation.

2. Device according to Claim 1, **characterized in that** the evaluation unit (9) is set up to include a plurality of axle loads (xi, yj) detected at different locations of the vehicle (5) with different weighting in the evaluation (S5, ..., S9).

3. Device according to Claim 1 or 2, **characterized in that** the evaluation unit (9) is set up to shorten the intervals of time (S11) if indications of fuel theft are determined.

4. Device according to one of the preceding claims, **characterized in that** the evaluation unit (9) is set up to determine fuel theft if the change (Δxi) in a sum of all axle load values (xi) exceeds a threshold value (THR1), and/or if individual changes (Δxi) exceed a respective threshold value (THR1xi).

5. Device according to one of the preceding claims, **characterized in that** the evaluation unit (9) is set up to determine fuel theft if the change (Δxi) in the sum of all axle load values (xi) exceeds the threshold value (THR1) and is less than a threshold value (THR2), and/or if the individual changes (Δxi) exceed the respective threshold value (THR1xi) and are less than a respective threshold value (THR2xi).

6. Device according to one of the preceding claims, **characterized in that** the evaluation unit (9) is set up to determine fuel theft if changes (Δxi) in some of the axle load values (xi) are positive and changes (Δyj) in the other axle load values (yj) are negative.

7. Device according to one of the preceding claims, **characterized in that** the device has an energy supply (17, 17', 27, 37) which is independent of the ignition of the vehicle (5).

8. Device according to one of the preceding claims, **characterized in that** the device is set up to transmit data in an encrypted manner via a signal connection (8), wherein the axle load sensors (11, ..., 62) are set up for encryption and the evaluation unit (9) is set up for decryption.

9. Vehicle (5) having a device according to one of Claims 1 to 8.

10. Method for operating a device for detecting fuel theft in a vehicle (5) according to Claim 9,
**characterized in that**
- an axle load (xi) of the vehicle (5) is captured at intervals of time (S2, S3, S11) by axle load sensors (11, 12, 21, 22, 31, 32, ..., 61, 62) which are arranged on different axles (10, 20, ..., 60) and/or on different sides (1, 2) of the vehicle (5),
- the captured axle load (xi) of the vehicle (5) is evaluated by an evaluation unit (9) integrated in a digital tachograph (19),
- fuel theft is detected by the evaluation unit (9) if a profile of a change (Δxi) in the axle load (xi) that is typical of fuel theft occurs, and
- an alarm is triggered by the evaluation unit (9) if the evaluation unit (9) detects fuel theft during the evaluation.

## Revendications

1. Dispositif destiné à identifier un vol de carburant dans un véhicule (5), comportant :
- des capteurs de charge par essieu (11, 12, 21, 22, 31, 32, ..., 61, 62), qui sont placés sur différents essieux (10, 20, ..., 60) et/ou sur différents côtés (1, 2) du véhicule (5) et qui sont aménagés pour détecter une charge par essieu (xi) du véhicule (5) dans des intervalles temporels (S2, S3, S11) et
- une unité d'évaluation (9), qui est aménagée pour évaluer la charge par essieu (xi) détectée du véhicule (5),
**caractérisé en ce que**
- l'unité d'évaluation (9) est intégrée dans un tachygraphe (19) numérique,
- l'unité d'évaluation (9) est aménagée pour détecter un vol de carburant, lors de la survenue d'un profil d'une modification (Δxi) de la charge par essieu (xi) typique d'un vol de carburant et
- l'unité d'évaluation (9) est aménagée pour déclencher une alarme lorsque l'unité d'évaluation (9) détecte le vol de carburant lors de l'évaluation.

2. Dispositif selon la revendication 1, **caractérisé en ce que** l'unité d'évaluation (9) est aménagée pour prendre en compte lors de l'évaluation (S5, ..., S9) avec une pondération différente plusieurs charges par essieu (xi, yj), détectées en différents endroits du véhicule (5).

3. Dispositif selon la revendication 1 ou 2, **caractérisé en ce que** l'unité d'évaluation (9) est aménagée pour réduire les intervalles temporels (S11) lorsque des indices d'un vol de carburant sont constatés.

4. Dispositif selon l'une quelconque des revendications précédentes, **caractérisé en ce que** l'unité d'évaluation (9) est aménagée pour constater un vol de carburant lorsque la modification (Δxi) d'une somme de toutes les valeurs de charge par essieu (xi) dépasse une valeur seuil (THR1) et/ou lorsque des modifications (Δxi) individuelles dépassent une valeur seuil (THR1xi) respective.

5. Dispositif selon l'une quelconque des revendications précédentes, **caractérisé en ce que** l'unité d'évaluation (9) est aménagée pour constater un vol de carburant lorsque la modification (Δxi) de la somme de toutes les valeurs de charge par essieu (xi) dépasse la valeur seuil (THR1) et est inférieure à une valeur seuil (THR2), et/ou lorsque les modifications (Δxi) individuelles dépassent la valeur seuil (THR1xi) respective et sont inférieures à une valeur seuil (THR2xi) respective.

6. Dispositif selon l'une quelconque des revendications précédentes, **caractérisé en ce que** l'unité d'évaluation (9) est aménagée pour constater un vol de carburant lorsque des modifications (Δxi) de certaines des valeurs de charge par essieu (xi) sont positives, et des modifications (Δyj) des autres valeurs de charge par essieu (yj) sont négatives.

7. Dispositif selon l'une quelconque des revendications précédentes, **caractérisé en ce que** le dispositif comporte une alimentation d'énergie (17, 17', 27, 37) indépendante de l'allumage du véhicule (5).

8. Dispositif selon l'une quelconque des revendications précédentes, **caractérisé en ce que** le dispositif est aménagé pour un transfert de données crypté via une connexion de signalisation (8), les capteurs de charge par essieu (11, ..., 62) étant aménagés pour un cryptage et l'unité d'évaluation (9) étant aménagée pour un décryptage.

9. Véhicule (5), comportant un dispositif selon l'une quelconque des revendications 1 à 8.

10. Procédé, destiné à faire fonctionner un dispositif destiné à identifier un vol de carburant sur un véhicule (5) selon la revendication 9, **caractérisé en ce que**
- par des capteurs de charge par essieu (11, 12, 21, 22, 31, 32, ..., 61, 62), qui sont placés sur différents essieux (10, 20, ..., 60) et/ou sur différents côtés (1, 2) du véhicule (5), une charge par essieu (xi) du véhicule (5) est détectée dans des intervalles temporels (S2, S3, S11),
- par une unité d'évaluation (9) intégrée dans un tachygraphe (19) numérique, la charge par essieu (xi) détectée du véhicule (5) est évaluée,
- par l'unité d'évaluation (9), lors de la survenue d'un profil d'une modification (Δxi) de la charge par essieu (xi) typique d'un vol de carburant, un vol de carburant est détecté et
- par l'unité d'évaluation (9), une alarme est déclenchée lorsque l'unité d'évaluation (9) détecte le vol de carburant lors de l'évaluation.
